# EUROPEAN PATENT APPLICATION

(11) **EP 4 583 416 A1**
(43) Date of publication of application: **09.07.2025**
(21) Application number: 24150081.8
(22) Date of filing: 02.01.2024
(51) Int. Cl.: H04B 5/43, H04B 5/79

(54) **NFC DEVICE AND IMPLEMENTING METHOD THEREOF**

(71) Applicant: NXP B.V., 5656 AG Eindhoven (NL)
(72) Inventor: Neophytou, Kyriakos, 5656 AG Eindhoven (NL); Haslinger, Dorian, 5656 AG Eindhoven (NL)
(74) Representative: Krott, Michel

(57) **Abstract**

In accordance with a first aspect of the present disclosure, a near field communication (NFC) device is provided, comprising: an antenna arrangement comprising a first NFC antenna and a second NFC antenna, wherein the first NFC antenna forms a first loop of the antenna arrangement and wherein the second NFC antenna forms a second loop of the antenna arrangement; a first transmitter operatively coupled to the first NFC antenna, wherein the first transmitter is configured to feed said first NFC antenna; a second transmitter operatively coupled to the second NFC antenna, wherein the second transmitter is configured to feed said second NFC antenna. In accordance with a second aspect of the present disclosure, a corresponding method of implementing an NFC device is conceived.

## Description

### TECHNICAL FIELD

The present disclosure relates to a near field communication (NFC) device. Furthermore, the present disclosure relates to a corresponding method of implementing an NFC device.

### BACKGROUND

NFC devices for wireless charging applications face different challenges than NFC devices for typical NFC applications, such as contactless transactions. More specifically, the antennas of NFC devices for wireless charging applications should cover a larger area than the antennas of NFC devices for typical NFC applications. In practice, it may difficult to realize that these antennas cover a larger area.

### SUMMARY

In accordance with a first aspect of the present disclosure, a near field communication (NFC) device is provided, comprising: an antenna arrangement comprising a first NFC antenna and a second NFC antenna, wherein the first NFC antenna forms a first loop of the antenna arrangement and wherein the second NFC antenna forms a second loop of the antenna arrangement; a first transmitter operatively coupled to the first NFC antenna, wherein the first transmitter is configured to feed said first NFC antenna; a second transmitter operatively coupled to the second NFC antenna, wherein the second transmitter is configured to feed said second NFC antenna.

In one or more embodiments, the first loop is an outer loop of the antenna arrangement and the second loop is an inner loop of the antenna arrangement.

In one or more embodiments, the first NFC antenna is physically separated from the second NFC antenna.

In one or more embodiments, the first NFC antenna and the second NFC antenna are single-ended antennas.

In one or more embodiments, the NFC device is configured to operate in a first operating state and in a second operating state, wherein: in the first operating state, the first transmitter feeds the first NFC antenna with a first signal and the second transmitter feeds the second NFC antenna with a second signal, wherein a phase of the first signal is substantially the same as a phase of the second signal; in the second operating state, the first transmitter feeds the first NFC antenna with a third signal and the second transmitter feeds the second NFC antenna with a fourth signal, wherein a phase of the third signal is substantially different from a phase of the fourth signal.

In one or more embodiments, the difference between the phase of the third signal and the phase of the fourth signal is 180 degrees or approximately 180 degrees.

In one or more embodiments, the NFC device is configured to periodically switch between the first operating state and the second operating state.

In one or more embodiments, a charging device comprises the NFC device of any preceding claim.

In one or more embodiments, the charging device is a Qi-based charging device.

In accordance with a second aspect of the present disclosure, a method of implementing a near field communication (NFC) device is conceived, comprising: providing the NFC device with an antenna arrangement, wherein said antenna arrangement comprises a first NFC antenna and a second NFC antenna, wherein the first NFC antenna forms a first loop of the antenna arrangement and wherein the second NFC antenna forms a second loop of the antenna arrangement; providing the NFC device with a first transmitter operatively coupled to the first NFC antenna, wherein the first transmitter is configured to feed said first NFC antenna; providing the NFC device with a second transmitter operatively coupled to the second NFC antenna, wherein the second transmitter is configured to feed said second NFC antenna.

In one or more embodiments, the first loop is an outer loop of the antenna arrangement and the second loop is an inner loop of the antenna arrangement.

In one or more embodiments, the first NFC antenna is physically separated from the second NFC antenna.

In one or more embodiments, the first NFC antenna and the second NFC antenna are single-ended antennas.

In one or more embodiments, the method further comprises configuring the NFC device to operate in a first operating state and in a second operating state, wherein: in the first operating state, the first transmitter feeds the first NFC antenna with a first signal and the second transmitter feeds the second NFC antenna with a second signal, wherein the phase of the first signal is substantially the same as the phase of the second signal; in the second operating state, the first transmitter feeds the first NFC antenna with a third signal and the second transmitter feeds the second NFC antenna with a fourth signal, wherein the phase of the third signal is substantially different from the phase of the fourth signal.

In one or more embodiments, the difference between the phase of the third signal and the phase of the fourth signal is 180 degrees or approximately 180 degrees.

### DESCRIPTION OF DRAWINGS

Embodiments will be described in more detail with reference to the appended drawings.
Fig. 1 shows an example of an NFC device.
Fig. 2 shows an antenna performance.
Fig. 3 shows magnetic field measurements.
Fig. 4 shows an illustrative embodiment of an NFC device.
Fig. 5 shows an illustrative embodiment of a method of implementing an NFC device.
Fig. 6A shows an illustrative embodiment of an NFC device operating in a first operating state.
Fig. 6B shows an illustrative embodiment of an NFC device operating in a second operating state.
Fig. 7A shows an antenna arrangement performance in the first operating state.
Fig. 7B shows an antenna arrangement performance in the second operating state.
Fig. 8A shows magnetic field measurements in the first operating state.
Fig. 8B shows magnetic field measurements in the second operating state.
Fig. 9 shows an example implementation of an NFC device.
Fig. 10 shows a practical implementation of an NFC device.

### DESCRIPTION OF EMBODIMENTS

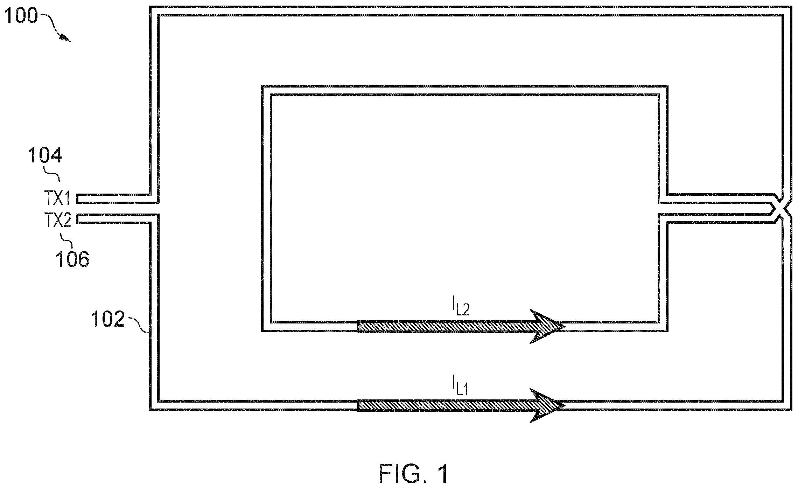

**Fig. 1** shows an example of an NFC device 100. The NFC device comprises an NFC antenna 102, a first transmitter 104 operatively coupled to one end of the NFC antenna 102, and a second transmitter 106 operatively coupled to a second end of the NFC antenna 102. As mentioned above, NFC devices for wireless charging applications face different challenges than NFC devices for typical NFC applications. More specifically, the antennas of NFC devices for wireless charging applications should cover a larger area than the antennas of NFC devices for typical NFC applications. In practice, it may difficult to realize that these antennas cover a larger area. For example, NFC antennas for Qi-based charger designs having a so-called NFC card protection function should cover a larger area than typical NFC reader-oriented applications. However, a relatively large size of the antenna can result in a weak magnetic field at its center. Therefore, an inner loop is often added to the antenna. In the example shown in Fig. 1, the NFC antenna 102 includes an inner loop and an outer loop which are connected to each other, thereby forming a single antenna which covers a larger area than an antenna without an inner loop. By providing the NFC antenna 102 with an inner loop the magnetic field flowing through the center of the NFC antenna 102 can effectively be increased. However, the antenna design shown in Fig. 1 may suffer from a reduced magnetic field between the two loops. This is caused by the orientation of the current flowing through the two loops, which may result in destructive interference of the magnetic fields between the two loops. As a consequence, the magnetic field of the NFC antenna 102 as a whole may become non-uniform, which may result in a poor performance of the NFC device 100.

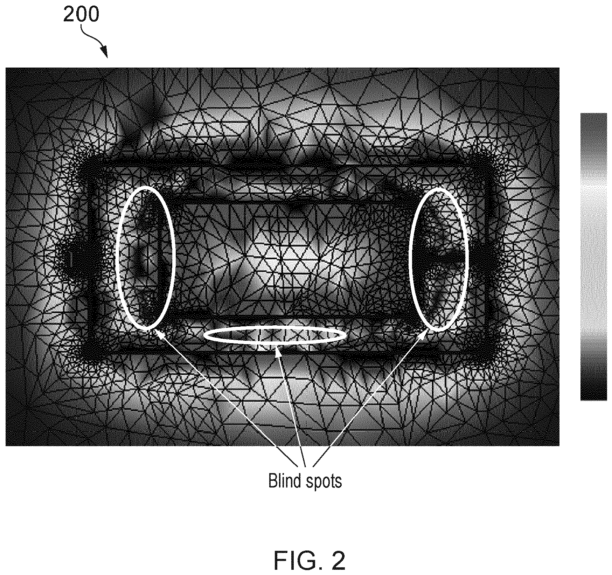

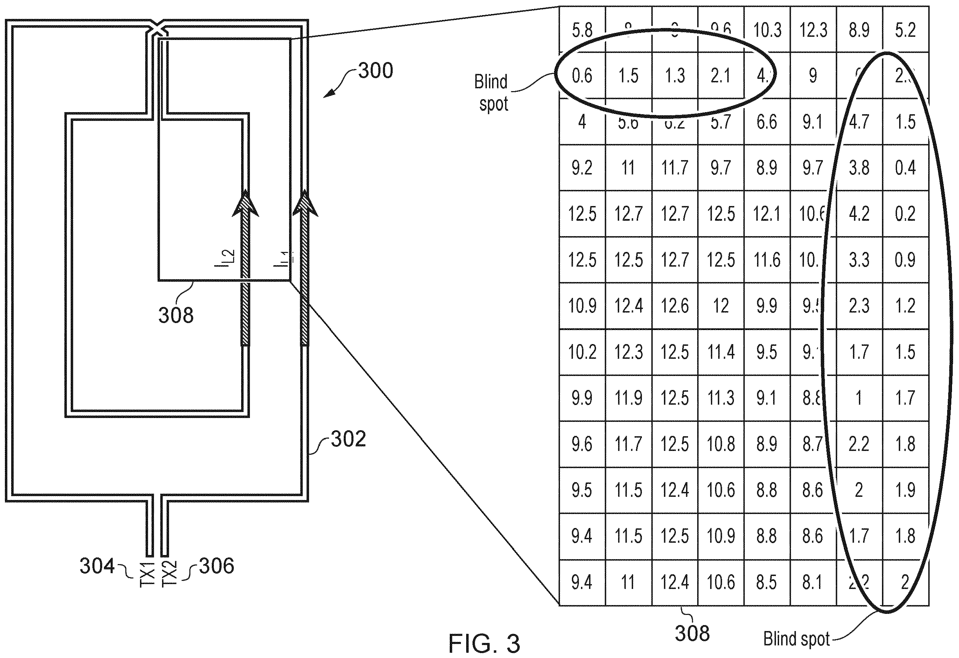

**Figs. 2** **and** **3** show the performance 200 of the NFC antenna shown in Fig. 1, respectively magnetic field measurements 300 performed on a specific area covered by this antenna, which are indicative of said performance. It is noted that the magnetic field measurements in the measurement area 308 are expressed in Volts (V). NFC antennas with a large aperture size may suffer from a weak magnetic field flowing through their center. As a result, detecting a phone or a tag with small sized NFC antennas placed in this center may be challenging. To improve the detection capability, one or more inner loops may be placed close to the center of the antenna, as shown in Fig. 1. Using the law of Biot-Savart, the magnetic field of such a structure may be analyzed. The current flow of the two loops have the same direction, which results in a constructive interference at the center of the antenna. However, the magnetic field between the loops may also suffer from destructive interference, thus resulting in a weak field (i.e., blind spots) between the two loops. This, in turn, may reduce the capability to communicate with a phone or a tag at the edges of the antenna.

Now discussed are an NFC device and a corresponding method of implementing an NFC device, which facilitate increasing the performance of said NFC device, in particular by producing a more uniform magnetic field.

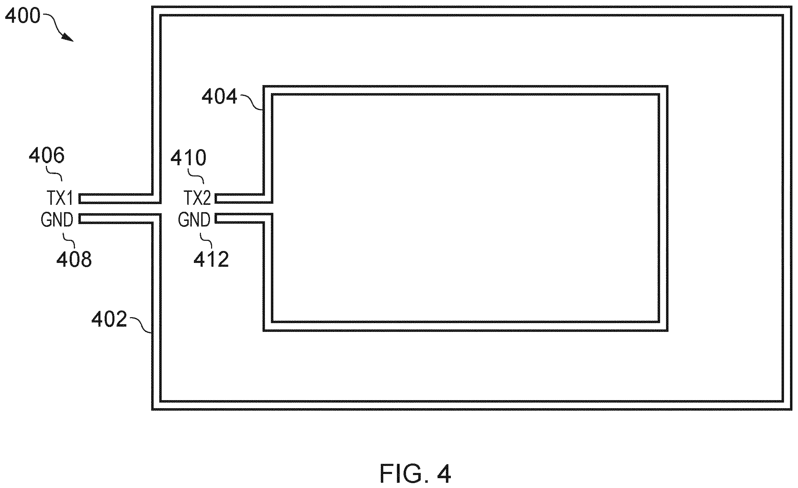

**Fig. 4** shows an illustrative embodiment of an NFC device 400. The NFC device 400 comprises an antenna arrangement, which in turn comprises a first NFC antenna 402 and a second NFC antenna 404. The first NFC antenna 402 forms a first loop of the antenna arrangement. Furthermore, the second NFC antenna 404 forms a second loop of the antenna arrangement. In addition, the NFC device 400 comprises a first transmitter 406 operatively coupled to the first NFC antenna 402, wherein the first transmitter 406 is configured to feed said first NFC antenna 402. Furthermore, the NFC device 400 comprises a second transmitter 410 operatively coupled to the second NFC antenna 404, wherein the second transmitter 410 is configured to feed said second NFC antenna 404. By providing the NFC device 400 with an antenna arrangement having two separate loops formed by the first and second NFC antenna 402, 404, and feeding said separate loops through different transmitters 406, 410, the NFC device 400 may produce a more uniform magnetic field. In a practical implementation, the first transmitter 406 is operatively coupled to one end of the first NFC antenna 402, while the other end of said NFC antenna 402 is coupled to ground 408. Furthermore, in a practical implementation, the second transmitter 410 is operatively coupled to one end of the second NFC antenna 404, while the other end of said NFC antenna 404 is coupled to ground 412.

In one or more embodiments, the first loop is an outer loop of the antenna arrangement and the second loop is an inner loop of the antenna arrangement. In this way, it is facilitated that the NFC device produces a more uniform magnetic field. In one or more embodiments, the first NFC antenna is physically separated from the second NFC antenna. In this way, it is further facilitated that the NFC device produces a more uniform magnetic field. In a practical implementation, the first NFC antenna and the second NFC antenna are single-ended antennas.

In one or more embodiments, the NFC device is configured to operate in a first operating state and in a second operating state, wherein: in the first operating state, the first transmitter feeds the first NFC antenna with a first signal and the second transmitter feeds the second NFC antenna with a second signal, wherein the phase of the first signal is substantially the same as the phase of the second signal; in the second operating state, the first transmitter feeds the first NFC antenna with a third signal and the second transmitter feeds the second NFC antenna with a fourth signal, wherein the phase of the third signal is substantially different from the phase of the fourth signal. In this way, it is further facilitated that the NFC device produces a more uniform magnetic field. In particular, by alternating between the first operating state and the second operating state, a more uniform magnetic field may be obtained. In a practical implementation, the difference between the phase of the third signal and the phase of the fourth signal is 180 degrees or approximately 180 degrees. Furthermore, in a practical implementation, the NFC device is configured to periodically switch between the first operating state and the second operating state. The presently disclosed NFC device may be used to advantage in a charging device, for example in a Qi-based charging device.

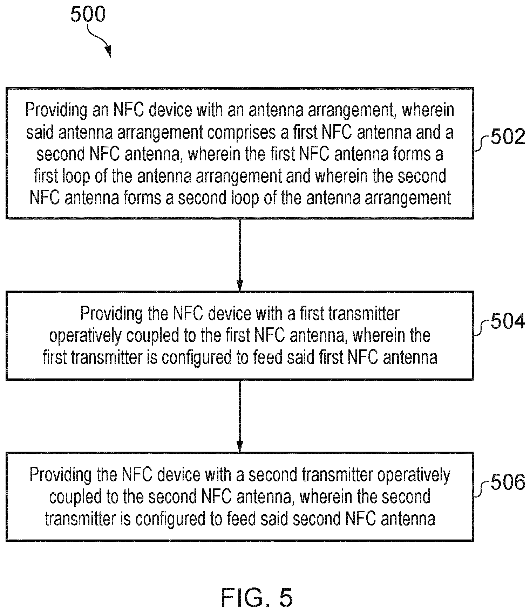

**Fig. 5** shows an illustrative embodiment of a method 500 of implementing an NFC device. The method 500 comprises the following steps. At 502, the NFC device is provided with an antenna arrangement, wherein said antenna arrangement comprises a first NFC antenna and a second NFC antenna, wherein the first NFC antenna forms a first loop of the antenna arrangement and wherein the second NFC antenna forms a second loop of the antenna arrangement. At 504, the NFC device is provided with a first transmitter operatively coupled to the first NFC antenna, wherein the first transmitter is configured to feed said first NFC antenna. Furthermore, at 506, the NFC device is provided with a second transmitter operatively coupled to the second NFC antenna, wherein the second transmitter is configured to feed said second NFC antenna. As mentioned above, by providing the NFC device with an antenna arrangement having two separate loops formed by the first and second NFC antenna, and feeding said separate loops through different transmitters, the NFC device may produce a more uniform magnetic field.

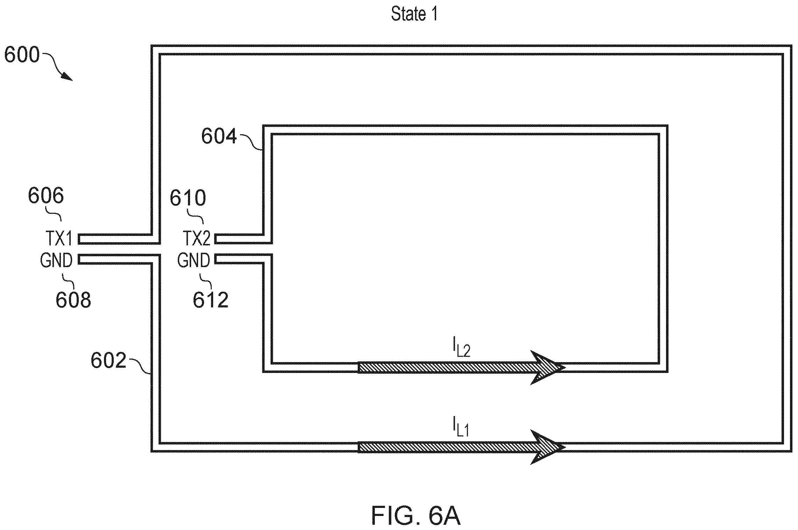

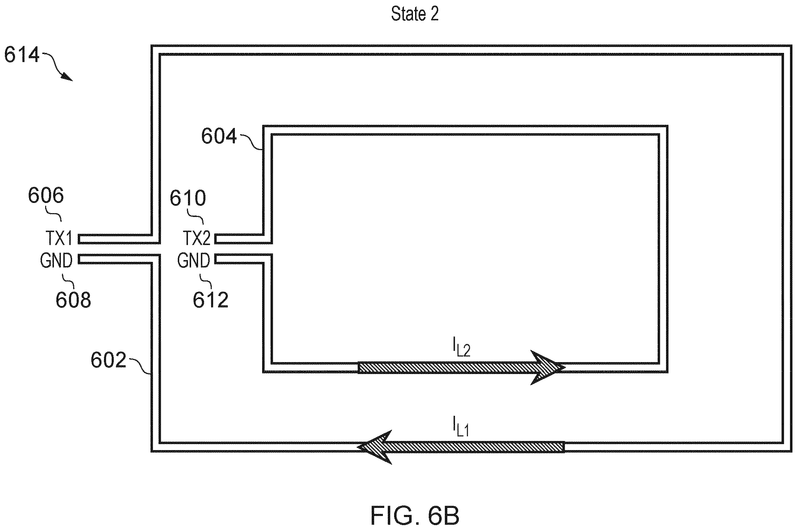

**Figs. 6A** **and** **6B** show an illustrative embodiment of an NFC device operating in a first operating state 600 and in a second state 614, respectively. The NFC device comprises two separated antenna loops, which are fed by two separated transmitters. Furthermore, each antenna is connected to a single-ended source and is thus not differential. By changing the phase difference between the two antennas, for example between in-phase (0° phase difference) and out-phase (180° phase difference), two different operating states can be achieved. When the two antennas are fed in-phase, the magnetic field produced by the two antennas results in constructive interference in the center. When the two antennas are fed out-phase, the magnetic field produced by the two antennas results in constructive interference between the two loops (i.e., at the edge of the antenna arrangement). By alternating between these two operating states (e.g., by periodically switching between the states) a uniform magnetic field can be achieved throughout the whole area covered by the antenna arrangement.

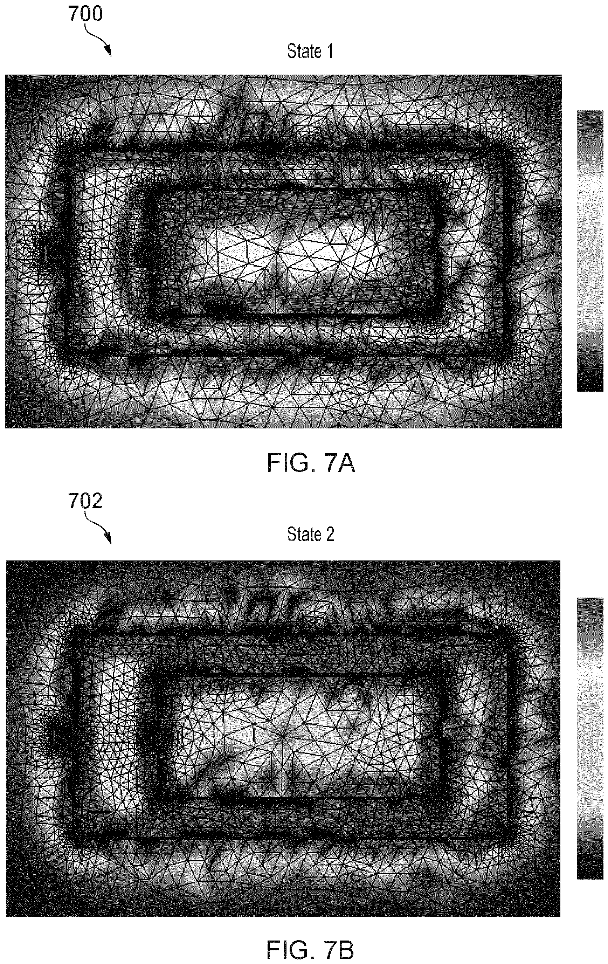

**Figs. 7A and 7B** show an antenna arrangement performance 700 in the first operating state 700 and in the second operating state 702, respectively. In particular, the performance is shown of an antenna arrangement having two separated antenna loops, which are fed by two separated transmitters, in accordance with the present disclosure. In the first operating state, the center of the antenna arrangement is covered, while in the second operating state the edge of the antenna arrangement is covered (i.e., the area between the two loops). As mentioned above, by alternating between the two operating states a uniform magnetic field can be achieved throughout the whole area covered by the antenna arrangement.

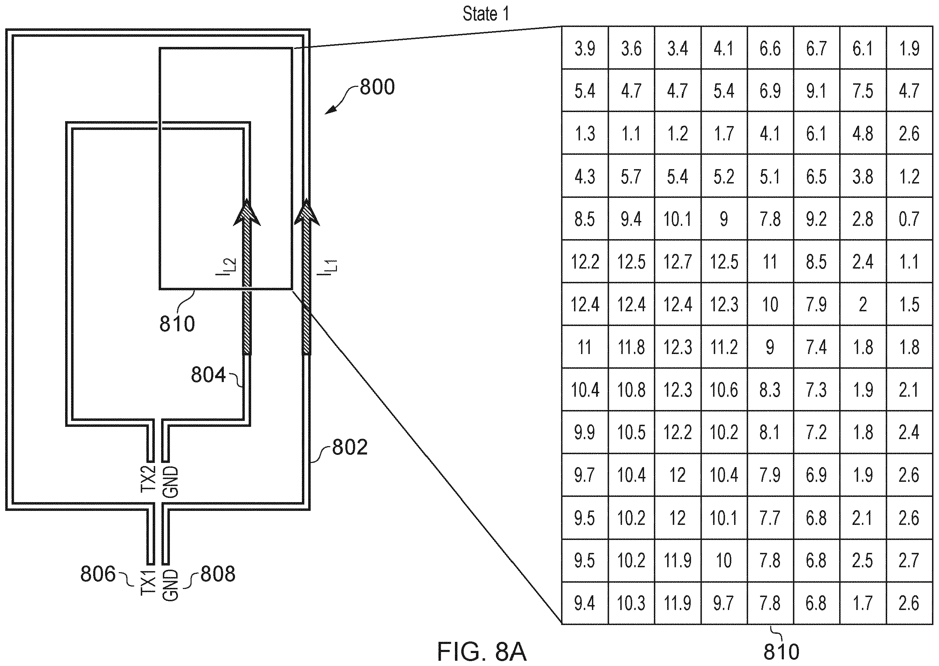

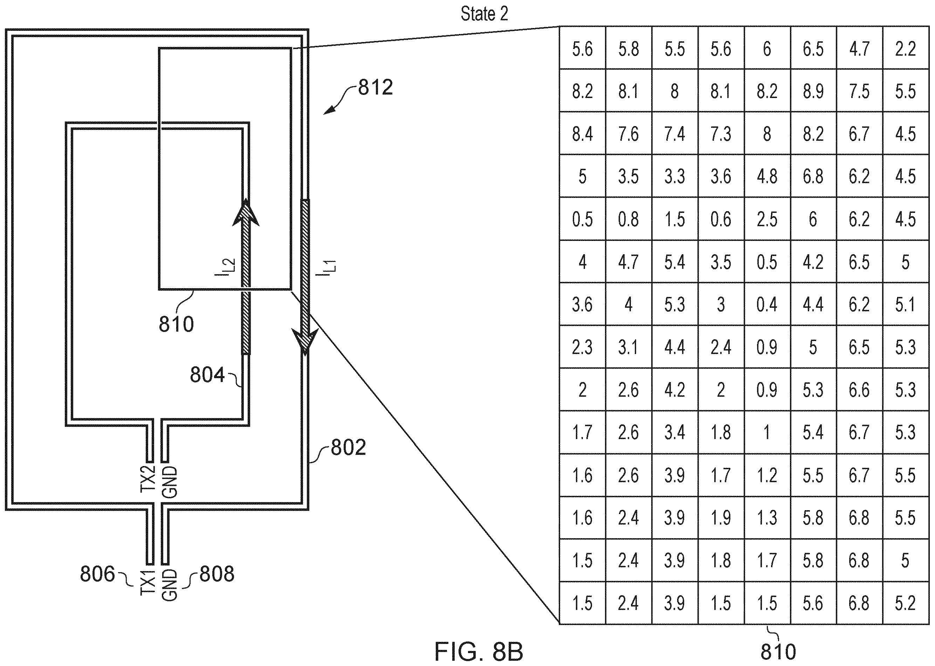

**Figs. 8A** **and** **8B** show magnetic field measurements in the first operating state 800 and in the second operating state 812, respectively. In particular, magnetic field measurements are shown of an antenna arrangement having two separated antenna loops, which are fed by two separated transmitters, in accordance with the present disclosure. It is noted that the magnetic field measurements in the measurement area 810 are expressed in Volts (V). By alternating between the two operating states the magnetic field throughout the whole area covered by the antenna arrangement may become more homogeneous.

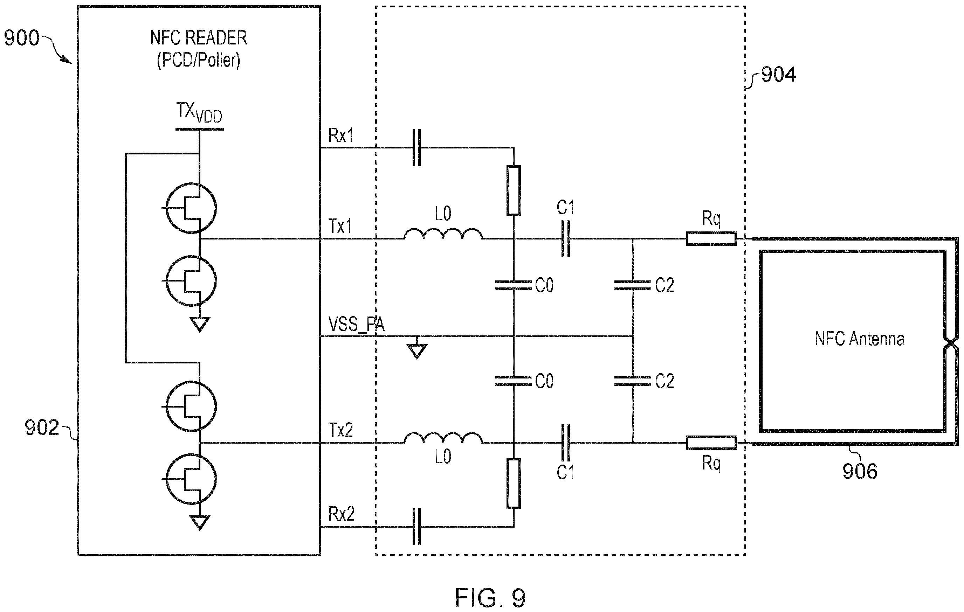

**Fig. 9** shows an example implementation of an NFC device 900. In particular, a typical implementation of an NFC device used for wireless charging applications is shown. The NFC device 900 comprises an NFC reader integrated circuit (IC) 902, which is operatively coupled to an NFC antenna 906 through a matching circuit 904. As explained with reference to Fig. 1, the NFC antenna 906 includes an inner loop and an outer loop which are connected to each other, thereby forming a single antenna which covers a larger area than an antenna without an inner loop. In particular, the NFC antenna 906 is a differential antenna, more specifically an antenna which is fed differentially by two separate transmitters. As mentioned with reference to Fig. 1 above, such a design may suffer from a reduced magnetic field between the two loops. This is caused by the orientation of the current flowing through the two loops, which may result in destructive interference of the magnetic fields between the two loops. As a consequence, the magnetic field of the NFC antenna 906 as a whole may become non-uniform, which may result in a poor performance of the NFC device 900.

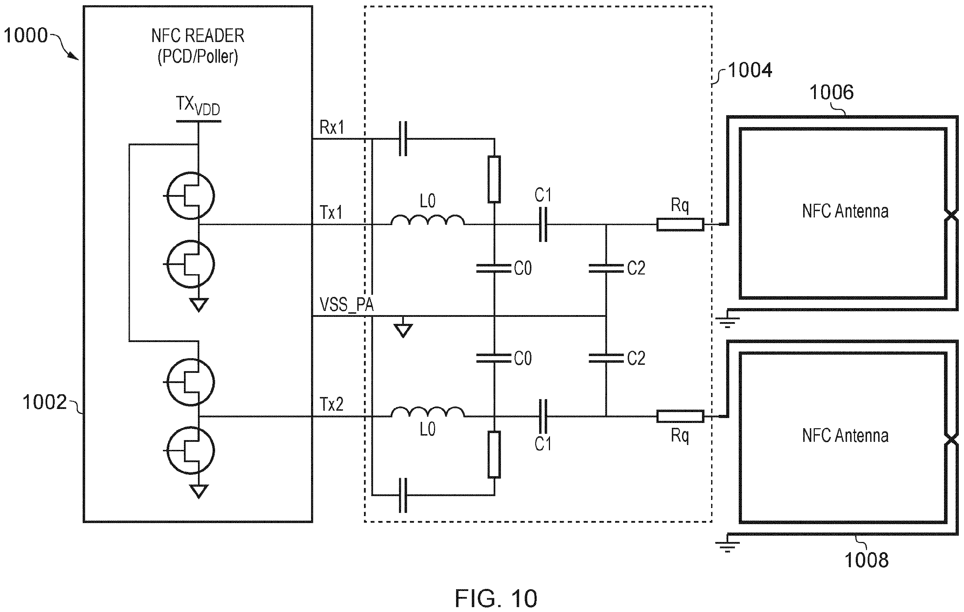

**Fig. 10** shows a practical implementation of an NFC device 1000. In particular, a possible implementation is shown of an NFC device in accordance with the present disclosure. The NFC device 1000 comprises an NFC reader IC 1002, which is operatively coupled to separate NFC antennas 1006, 1008 through a matching circuit 1004. More specifically, the NFC antennas 1006, 1008 form separate loops of an antenna arrangement included in the NFC device 1000. In this case, the two separate transmitters are used to feed two single-ended NFC antennas 1006, 1008. The two transmitters can be controlled separately, which enables a precise control of the phase difference between them. Therefore, in-phase and out-phase operating states can easily be realized using such implementation.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: NFC device
- 102: NFC antenna
- 104: first transmitter
- 106: second transmitter
- 200: antenna performance
- 300: magnetic field measurements
- 302: NFC antenna
- 304: first transmitter
- 306: second transmitter
- 308: measurement area
- 400: NFC device
- 402: first NFC antenna
- 404: second NFC antenna
- 406: first transmitter
- 408: ground
- 410: second transmitter
- 412: ground
- 500: method of implementing an NFC device
- 502: providing an NFC device with an antenna arrangement, wherein said antenna arrangement comprises a first NFC antenna and a second NFC antenna, wherein the first NFC antenna forms a first loop of the antenna arrangement and wherein the second NFC antenna forms a second loop of the antenna arrangement
- 504: providing the NFC device with a first transmitter operatively coupled to the first NFC antenna, wherein the first transmitter is configured to feed said first NFC antenna
- 506: providing the NFC device with a second transmitter operatively coupled to the second NFC antenna, wherein the second transmitter is configured to feed said second NFC antenna
- 600: NFC device operating in a first operating state
- 602: first NFC antenna
- 604: second NFC antenna
- 606: first transmitter
- 608: ground
- 610: second transmitter
- 612: ground
- 614: NFC device operating in a second operating state
- 700: antenna arrangement performance in the first operating state
- 702: antenna arrangement performance in the second operating state
- 800: magnetic field measurements in the first operating state
- 802: first NFC antenna
- 804: second NFC antenna
- 806: first transmitter
- 808: ground
- 810: measurement area
- 812: magnetic field measurements in the second operating state
- 900: example implementation of an NFC device
- 902: NFC reader IC
- 904: matching circuit
- 906: NFC antenna
- 1000: practical implementation of an NFC device
- 1002: NFC reader IC
- 1004: matching circuit
- 1006: NFC antenna
- 1008: NFC antenna

## Claims

1. A near field communication, NFC, device, comprising:
an antenna arrangement comprising a first NFC antenna and a second NFC antenna, wherein the first NFC antenna forms a first loop of the antenna arrangement and wherein the second NFC antenna forms a second loop of the antenna arrangement;
a first transmitter operatively coupled to the first NFC antenna, wherein the first transmitter is configured to feed said first NFC antenna;
a second transmitter operatively coupled to the second NFC antenna, wherein the second transmitter is configured to feed said second NFC antenna.

2. The NFC device of claim 1, wherein the first loop is an outer loop of the antenna arrangement and wherein the second loop is an inner loop of the antenna arrangement.

3. The NFC device of any preceding claim, wherein the first NFC antenna is physically separated from the second NFC antenna.

4. The NFC device of any preceding claim, wherein the first NFC antenna and the second NFC antenna are single-ended antennas.

5. The NFC device of any preceding claim, being configured to operate in a first operating state and in a second operating state, wherein:
in the first operating state, the first transmitter feeds the first NFC antenna with a first signal and the second transmitter feeds the second NFC antenna with a second signal, wherein a phase of the first signal is substantially the same as a phase of the second signal;
in the second operating state, the first transmitter feeds the first NFC antenna with a third signal and the second transmitter feeds the second NFC antenna with a fourth signal, wherein a phase of the third signal is substantially different from a phase of the fourth signal.

6. The NFC device of claim 5, wherein the difference between the phase of the third signal and the phase of the fourth signal is 180 degrees or approximately 180 degrees.

7. The NFC device of claim 5 or 6, being configured to periodically switch between the first operating state and the second operating state.

8. A charging device comprising the NFC device of any preceding claim.

9. The charging device of claim 8, being a Qi-based charging device.

10. A method of implementing a near field communication, NFC, device, comprising:
providing the NFC device with an antenna arrangement, wherein said antenna arrangement comprises a first NFC antenna and a second NFC antenna, wherein the first NFC antenna forms a first loop of the antenna arrangement and wherein the second NFC antenna forms a second loop of the antenna arrangement;
providing the NFC device with a first transmitter operatively coupled to the first NFC antenna, wherein the first transmitter is configured to feed said first NFC antenna;
providing the NFC device with a second transmitter operatively coupled to the second NFC antenna, wherein the second transmitter is configured to feed said second NFC antenna.

11. The method of claim 10, wherein the first loop is an outer loop of the antenna arrangement and wherein the second loop is an inner loop of the antenna arrangement.

12. The method of claim 10 or 11, wherein the first NFC antenna is physically separated from the second NFC antenna.

13. The method of any one of claims 10 to 12, wherein the first NFC antenna and the second NFC antenna are single-ended antennas.

14. The method of any one of claims 10 to 13, further comprising configuring the NFC device to operate in a first operating state and in a second operating state, wherein:
in the first operating state, the first transmitter feeds the first NFC antenna with a first signal and the second transmitter feeds the second NFC antenna with a second signal, wherein the phase of the first signal is substantially the same as the phase of the second signal;
in the second operating state, the first transmitter feeds the first NFC antenna with a third signal and the second transmitter feeds the second NFC antenna with a fourth signal, wherein the phase of the third signal is substantially different from the phase of the fourth signal.

15. The NFC device of claim 14, wherein the difference between the phase of the third signal and the phase of the fourth signal is 180 degrees or approximately 180 degrees.

## Amended claims

### Amended claims in accordance with Rule 137(2) EPC.

1. A near field communication, NFC, device (400), comprising:
an antenna arrangement comprising a first NFC antenna (402) and a second NFC antenna (404), wherein the first NFC antenna (402) forms a first loop of the antenna arrangement and wherein the second NFC antenna (404) forms a second loop of the antenna arrangement;
a first transmitter (406) operatively coupled to the first NFC antenna (402), wherein the first transmitter (406) is configured to feed said first NFC antenna (402);
a second transmitter (410) operatively coupled to the second NFC antenna (404), wherein the second transmitter (410) is configured to feed said second NFC antenna (404);
**characterized in that** the NFC device (400) is configured to operate in a first operating state and in a second operating state, wherein:
in the first operating state, the first transmitter (406) feeds the first NFC antenna (402) with a first signal and the second transmitter (410) feeds the second NFC antenna (404) with a second signal, wherein a phase of the first signal is substantially the same as a phase of the second signal;
in the second operating state, the first transmitter (406) feeds the first NFC antenna (402) with a third signal and the second transmitter (410) feeds the second NFC antenna (404) with a fourth signal, wherein a phase of the third signal is substantially different from a phase of the fourth signal.

2. The NFC device (400) of claim 1, wherein the first loop is an outer loop of the antenna arrangement and wherein the second loop is an inner loop of the antenna arrangement.

3. The NFC device (400) of any preceding claim, wherein the first NFC antenna (402) is physically separated from the second NFC antenna (404).

4. The NFC device (400) of any preceding claim, wherein the first NFC antenna (402) and the second NFC antenna (404) are single-ended antennas.

5. The NFC device (400) of any preceding claim, wherein the difference between the phase of the third signal and the phase of the fourth signal is 180 degrees.

6. The NFC device (400) of any preceding claim, being configured to periodically switch between the first operating state and the second operating state.

7. A charging device comprising the NFC device (400) of any preceding claim.

8. The charging device of claim 7, being a Qi-based charging device.

9. A method (500) of implementing a near field communication, NFC, device, comprising:
providing (502) the NFC device with an antenna arrangement, wherein said antenna arrangement comprises a first NFC antenna and a second NFC antenna, wherein the first NFC antenna forms a first loop of the antenna arrangement and wherein the second NFC antenna forms a second loop of the antenna arrangement;
providing (504) the NFC device with a first transmitter operatively coupled to the first NFC antenna, wherein the first transmitter is configured to feed said first NFC antenna;
providing (506) the NFC device with a second transmitter operatively coupled to the second NFC antenna, wherein the second transmitter is configured to feed said second NFC antenna;
**characterized in that** the method (500) further comprises configuring the NFC device to operate in a first operating state and in a second operating state, wherein:
in the first operating state, the first transmitter feeds the first NFC antenna with a first signal and the second transmitter feeds the second NFC antenna with a second signal, wherein the phase of the first signal is substantially the same as the phase of the second signal;
in the second operating state, the first transmitter feeds the first NFC antenna with a third signal and the second transmitter feeds the second NFC antenna with a fourth signal, wherein the phase of the third signal is substantially different from the phase of the fourth signal.

10. The method (500) of claim 9, wherein the first loop is an outer loop of the antenna arrangement and wherein the second loop is an inner loop of the antenna arrangement.

11. The method (500) of claim 9 or 10, wherein the first NFC antenna is physically separated from the second NFC antenna.

12. The method (500) of any one of claims 9 to 11, wherein the first NFC antenna and the second NFC antenna are single-ended antennas.

13. The NFC device (500) of any one of claims 9 to 12, wherein the difference between the phase of the third signal and the phase of the fourth signal is 180 degrees.
